# DEMANDE DE BREVET EUROPEEN

(11) **EP 3 862 819 A1**
(43) Date de publication de la demande: **11.08.2021**
(21) Numéro de dépôt: 21155043.9
(22) Date de dépôt: 03.02.2021
(51) Int. Cl.: G04D 3/00, C21D 9/00, C21D 1/34, C21D 1/613, C21D 1/74, C21D 1/09

(54) **PROCÉDÉ DE TRAITEMENT THERMIQUE D'UN COMPOSANT HORLOGER**

(30) Priorité: 04.02.2020 EP 20155489
(71) Demandeur: ROLEX SA, 1211 Genève 26 (CH)
(72) Inventeur: PERRINJAQUET, Olivier, 2065 SAVAGNIER (CH)
(74) Mandataire: Moinas & Savoye SARL

(57) **Abrégé**

Procédé de traitement thermique d'un composant horloger (1), le procédé comprenant les étapes suivantes :
- chauffage du composant par irradiation par un faisceau laser d'au moins 80%, voire d'au moins 90% de la surface du composant projetée parallèlement à la direction du faisceau laser, puis
- refroidissement du composant dans un flux gazeux.

## Description

L'invention concerne un procédé de traitement thermique d'un composant horloger. L'invention concerne aussi un composant horloger obtenu par un tel procédé de traitement. L'invention concerne aussi un mouvement horloger comprenant un tel composant horloger L'invention concerne encore une pièce d'horlogerie comprenant un tel composant ou un tel mouvement.

Traditionnellement, les fournitures horlogères, notamment les axes horlogers en acier au carbone (20AP, Finemac, LAW100x, ...) et en acier inoxydable martensitique (4C27A, LABORM+, X35ST+, ...), mais également les composants en alliage à base de cuivre tel que l'alliage CuBe2 ou en acier Durnico, sont traitées thermiquement par Iot au sein de fours, puis trempées dans un bain d'huile afin d'atteindre les propriétés requises. Il en résulte une hétérogénéité potentielle des propriétés de la matière des pièces en fonction de la taille du Iot et des cinétiques individuelles de chauffe et de refroidissement des pièces dudit Iot, en fonction notamment de leur localisation au sein dudit Iot. De plus, de grandes quantités d'énergie sont nécessaires pour porter et maintenir le four en température. En effet, ce type de four reste généralement en fonction 24h/24 et 7j/7 afin d'en garantir la stabilité thermique. Ceci représente une consommation annuelle d'électricité estimée entre 100'000 kWh et 163'000 kWh par four, en fonction de la puissance du four.

La fabrication traditionnelle de composants horlogers en acier trempé, tels que des pignons, des ressorts, des renvois, des bascules ou des axes (liste non exhaustive), se déroule comme suit:
- décolletage des axes à partir de barres, ou étampage des pièces bidimensionnelles à partir de bandes,
- traitement thermique au four, typiquement par Iot de 3000 pièces maintenues entre 15 et 90 secondes à 800°C,
- trempe à l'huile (120°C),
- post-traitement des pièces (roulage, polissage, etc.).

Le document FR1165357 donne des alternatives pour la réalisation de ce type de composants, faisant intervenir différents types de traitements thermiques à des températures comprises entre 200 et 800°C suivis de phases de refroidissement plus ou moins contrôlées. Toutes ces alternatives font intervenir des fours.

Le document JPS58058271 décrit un procédé de traitement thermique de composants horlogers en acier. Ce procédé comprend une étape consistant à donner des valeurs de dureté différentes à différentes parties du composant.

Le traitement thermique de composants individuels par laser est connu et fait notamment l'objet de plusieurs demandes de brevet ou brevets. Par exemple, les documents EP0147190, EP0130749 ou JPS58197223 décrivent le traitement thermique par laser de roues d'engrenages. Le traitement est localisé, notamment en surface des roues, et les déplacements relatifs du faisceau laser et de la pièce sont coordonnés pour venir balayer les zones à traiter.

Le but de l'invention est de fournir un procédé de traitement thermique de composants horlogers améliorant les procédés connus de l'art antérieur. En particulier, l'invention propose un procédé permettant de traiter thermiquement des composants horlogers de manière intégrale, répétable et énergétiquement efficace.

Un procédé de traitement thermique selon l'invention est défini par la revendication 1.

Différents modes d'exécution du procédé sont définis par les revendications 2 à 6.

Un composant selon l'invention est défini par la revendication 7.

Un mouvement horloger selon l'invention est défini par la revendication 8.

Une pièce d'horlogerie selon l'invention est définie par la revendication 9.

Les dessins annexés représentent, à titre d'exemples, un mode de réalisation d'une installation de traitement thermique d'un composant horloger et des modes de réalisation d'une pièce d'horlogerie.

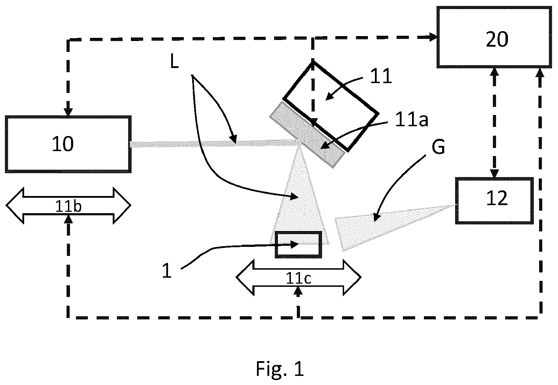

La figure 1 est une vue schématique d'un mode de réalisation d'une installation de traitement thermique.
Les figures 2 à 7 représentent des modes de réalisation d'une pièce d'horlogerie.
Les figures 8 et 9 représentent des orientations typiques d'irradiation des composants par le faisceau laser.

Un mode de réalisation d'une installation de traitement thermique d'un composant 1 est décrit ci-après.

L'installation comprend :
- un élément de production 10 d'un faisceau laser L,
- un élément de déplacement 11 du faisceau laser pour focaliser ou diriger le faisceau laser sur le composant 1,

- un élément de génération 12 d'un flux gazeux G, et
- un calculateur ou un ordinateur 20 permettant de commander les fonctionnements des différents éléments de manière coordonnée pour mettre en œuvre le procédé de traitement thermique.

L'élément de déplacement 11 du faisceau laser comprend par exemple un miroir motorisé 11a permettant de diriger le faisceau laser vers le composant. Alternativement, l'élément peut être un actionneur de déplacement 11b de l'élément de production 10 du faisceau laser ou un actionneur de déplacement 11c du composant 1.

L'élément de génération 12 d'un flux gazeux comprend par exemple un ventilateur mettant en mouvement un gaz ou une buse libérant un gaz sous pression.

Le calculateur 20 comprend un support d'enregistrement ou une mémoire.

Une telle installation permet, par activation séquencée des différents éléments de mettre en œuvre un procédé de traitement thermique selon l'invention et, en conséquence, de traiter le composant.

Un mode d'exécution d'un procédé de traitement thermique est décrit ci-après, appliqué à un composant horloger 1.

Le composant horloger 1 est, par exemple, un arbre d'un mouvement de pièce d'horlogerie, notamment un arbre de mouvement de montre, en particulier un axe, notamment un axe pouvant comporter un pignon, une bascule, un renvoi, une came, un levier, un pont, un ressort, une roue ou de manière générale toute fourniture horlogère de petite dimension nécessitant un traitement thermique pour présenter ses propriétés finales.

De préférence, le composant présente :
- une plus grande dimension inférieure à 10 mm ou inférieure à 8 mm ou inférieure à 7 mm ou inférieure à 6 mm ou inférieure à 5 mm, et/ou
- une aire de plus grande surface projetée inférieure à 20 mm² ou inférieure à 15 mm² ou inférieure à 10 mm² ou inférieure à 6 mm² ou inférieure à 4 mm² ou inférieure à 2 mm² ou inférieure à 0.5 mm², et/ou
- un volume inférieur à 10 mm³ ou inférieur à 8 mm³ ou inférieur à 6 mm³ ou inférieur à 4 mm³ ou inférieur à 1.5 mm³ ou inférieur à 0.8 mm³ ou inférieur à 0.5 mm³.

Par exemple, le composant peut avoir :
- un diamètre maximal compris entre 1 mm et 4.5 mm, et/ou
- une longueur ou une épaisseur comprise entre 0.35 mm et 8 mm.

Par exemple, le composant est en métal, notamment en acier, en particulier en acier au carbone (Finemac ou autre).

Dans une première étape du procédé, on chauffe le composant par irradiation du composant par un faisceau laser, soit en focalisant le faisceau laser sur le composant. Par exemple, le faisceau laser est un faisceau laser statique ou fixe. De préférence, on chauffe l'intégralité ou la quasi-intégralité du volume du composant de manière homogène. Autrement dit, on ne chauffe pas le composant dans le but de traiter une partie seulement de la surface du composant.

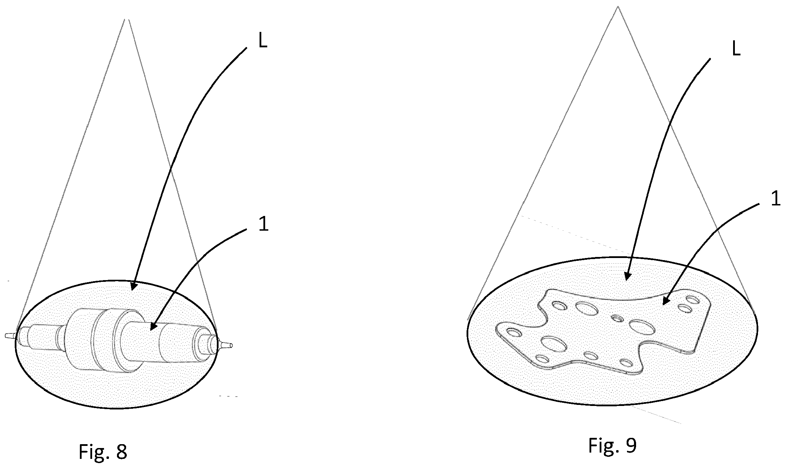

Dans cette première étape, on focalise le faisceau laser sur le composant de sorte qu'une grande partie de la surface du composant est irradiée par le faisceau laser. Par exemple, le faisceau irradie au moins 80% de la surface du composant projetée parallèlement à la direction du faisceau (qui est la direction de projection), voire au moins 90% de la surface du composant projetée parallèlement à la direction du faisceau. Par exemple, le faisceau peut être focalisé sur la partie centrale d'un axe comme illustré en figure 8, afin d'éviter une surchauffe des extrémités de petit diamètre tout en assurant, par conductivité thermique, l'échauffement de la matière aux températures souhaitées. En particulier, le composant peut être un axe et le faisceau laser peut être centré sur l'axe, notamment centré de sorte que l'irradiation des extrémités de l'axe puisse être évitée.

Dans le cas où l'on chauffe le composant par irradiation du composant par le faisceau laser alors que le composant est en mouvement relativement au faisceau laser (notamment composant mobile alors que le faisceau laser est fixe ou composant fixe alors que le faisceau laser est mobile), à au moins un instant donné, de préférence pendant au moins 80% ou au moins 90% de la durée d'irradiation, le faisceau laser irradie au moins 80% de la surface du composant projetée parallèlement à la direction du faisceau, voire au moins 90% de la surface du composant projetée parallèlement à la direction du faisceau.

Les pourcentages de surfaces évoqués dans les deux paragraphes qui précèdent sont donc le rapport (quotient) de :
- l'aire de la surface d'intersection de (i) la projection du faisceau laser selon la direction de ce faisceau laser sur un plan perpendiculaire au faisceau laser (ou spot) avec (ii) la projection du composant selon la direction de ce faisceau laser sur ce plan perpendiculaire au faisceau laser, sur
- l'aire de la projection du composant selon la direction de ce faisceau laser sur ce plan perpendiculaire au faisceau laser.

Le faisceau du laser peut bien évidemment irradier une aire plus grande que l'aire de la projection du composant sur le plan perpendiculaire au faisceau du laser, comme illustré en figure 9, de manière à atteindre une meilleure homogénéité de l'échauffement. Dans ce cas, le pourcentage précédemment évoqué est 100%.

De préférence encore, on focalise le faisceau laser sur le composant de sorte que l'intégralité du composant ou la quasi-intégralité du composant se trouve irradiée par le faisceau laser. Ceci permet de chauffer intégralement chaque composant par laser, de manière homogène. Le composant peut ainsi être chauffé très rapidement et de manière répétable.

Préférentiellement, le composant 1 à traiter est positionné au centre du faisceau laser L.

Préférentiellement, le faisceau laser est statique et ne balaye pas le composant. Dans un tel cas, le faisceau laser est immobile relativement à un bâti et/ou relativement au composant. En alternative, le faisceau laser peut toutefois balayer la surface du composant pour le porter dans son entier à la température souhaitée, le plus rapidement possible et afin de le porter à température de manière homogène, sans causer de surchauffe localisée.

Le balayage peut être réalisé par déplacement du composant par rapport au bâti, le faisceau laser restant fixe ou statique relativement au bâti. Par exemple, ce balayage peut être réalisé en tirant parti du convoyage du composant par rapport au faisceau laser, comme lors d'un chauffage dans un four à passage. Le balayage peut alternativement être réalisé par déplacement du faisceau laser par rapport au bâti, le composant restant fixe relativement au bâti.

Afin de maximiser l'efficacité du procédé, le composant est orienté de manière à présenter au faisceau incident la plus grande surface possible.

Par exemple pour un axe ou un pignon, l'incidence du faisceau laser est perpendiculaire à la direction longitudinale du composant, comme illustré en figure 8. Par exemple pour une bascule, une came ou un pont, l'incidence du faisceau laser est perpendiculaire à la plus grande surface du composant, comme illustré en figure 9.

Avantageusement, le composant peut être mis en mouvement relativement au faisceau laser lors du chauffage. Par exemple, afin de favoriser l'intégration du procédé dans une gamme de fabrication, le composant peut être déplacé sous le faisceau laser pour intégrer la phase de traitement thermique au sein d'une ligne de production.

Par exemple, le composant peut être déplacé en translation sous le faisceau laser sur une chaîne de convoyage des composants. Ainsi, le composant peut « traverser » le faisceau laser de part en part (par exemple alors qu'il se trouve sur une bande de convoyage). Cette « traversée » du faisceau laser est réalisée à une vitesse telle qu'elle permet une durée d'irradiation nécessaire pour porter le composant à une température souhaitée pour réaliser le traitement thermique désiré.

Par exemple, le composant peut être déplacé en rotation sous le faisceau laser alors que le composant est maintenu, notamment via une broche ou un mandrin, sur une machine comme un tour ou un centre d'usinage. Ainsi, le composant peut être mis en rotation sur lui-même (par exemple autour d'un axe parallèle ou perpendiculaire au faisceau laser) au centre du faisceau pour homogénéiser l'irradiation du composant.

Cette première étape de chauffage permet de porter l'intégralité du composant à une température permettant à des transformations de phases de se dérouler.

Par exemple, la première étape de chauffage permet d'amener le composant à une température d'environ 800 °C en un temps inférieur à 5 secondes.

Cette première étape est par exemple mise en œuvre par activation de l'élément de production 10 du faisceau laser L et par activation éventuelle de l'élément de déplacement du faisceau laser 11a ou 11b pour irradier le composant grâce au faisceau laser.

A la fin de la première étape, on cesse d'irradier le composant à l'aide du laser.

Puis, suite à la première étape, dans une deuxième étape du procédé, on refroidit le composant dans un flux gazeux G, notamment un flux d'air ou un flux de gaz neutre ou inerte.

Le flux gazeux est produit autour du composant. Il permet un refroidissement rapide du composant. De préférence, le flux gazeux est tel qu'il permet de tremper le composant, c'est-à-dire de figer la microstructure du composant dans une configuration déterminée. L'utilisation d'un gaz pour effectuer le refroidissement évite, par rapport à l'huile utilisée traditionnellement, la caléfaction des composants, ou l'apparition de taches. Il est également plus aisé de contrôler la qualité de la trempe. De plus, les défauts de géométrie qui pourraient découler d'un refroidissement mal contrôlé, entraînant des absences locales de trempe par exemple, sont ainsi éliminés.

Le composant peut ainsi être refroidi de manière très rapide et répétable.

Cette deuxième étape est par exemple mise en œuvre par activation de l'élément de génération 12 du flux gazeux.

Il résulte des calculs préliminaires qu'un échauffement est possible de manière uniforme moyennant des puissances comprises entre 20 mW et 50 W. Ces calculs prennent en compte différents paramètres du composant à traiter, tels que ses dimensions (longueur, diamètre et volume), la réflectivité de la surface du composant pour la longueur d'onde du laser utilisé, le coefficient thermique du matériau, notamment la capacité calorifique du matériau dans lequel est réalisé le composant.

On arrive ainsi théoriquement à porter un barreau en acier Finemac d'un diamètre de 2 mm et d'une longueur de 6 mm à une température de 810°C en 5 secondes, sous un faisceau d'une puissance de quelques watts.

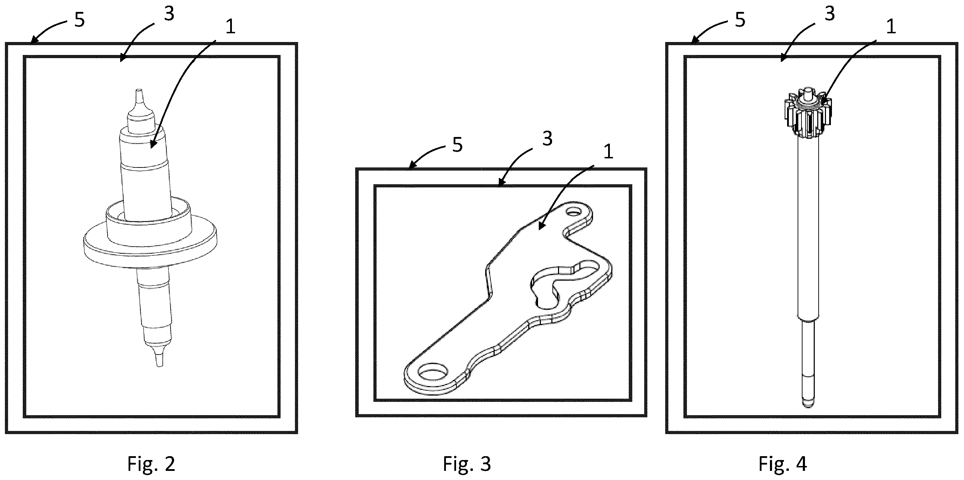

Des essais ont été réalisés sur différents composants pour valider le calcul ci-dessus. Une puissance de 6W permet effectivement de porter un composant de type axe horloger illustré en figure 2, d'un volume d'environ 0.07 mm³, à une température suffisante pour engendrer une modification de son état métallurgique et procéder ainsi au traitement thermique souhaité.

Par exemple, des composants comme un arbre, une tige, un axe, une bascule, une came, un doigt, un pignon ou une roue peuvent être traités de cette manière. Les dimensions typiques de ces composants sont résumées dans le tableau ci-dessous.

| Composant | Volume typique du composant [mm³] | Surface projetée approximative [mm²] |
|---|---|---|
| Arbre de barillet | 6 à 8 | 3.5 à 4 |
| Axe de balancier | 0.5 à 1 | 1.2 à 2 |
| Bascule | 3 à 4.5 | 10 à 18 |
| Came | 2 à 3 | 5 à 8 |
| Doigt de quantième | 0.2 à 0.6 | 1.5 à 3 |
| Pignon de seconde | 0.6 à 1 | 2 à 3.5 |
| Roue | 2 à 8 | 6 à 16 |

Les paramètres principaux du procédé permettant d'atteindre un résultat conforme aux attentes sont :
- la matière du composant, sa conductivité thermique et son coefficient de réflexion par rapport à la longueur d'onde du faisceau laser ;
- le volume et l'étendue du composant irradié par le faisceau laser;
- la géométrie du composant et son orientation par rapport à l'angle d'irradiation du faisceau laser ;
- les paramètres intrinsèques du laser, tels que sa fréquence, sa longueur d'onde, sa puissance et le diamètre du spot ;
- la durée d'irradiation, par exemple comprise entre 4 et 12 secondes ;
- les caractéristiques du flux de gaz dont la nature du gaz et sa vitesse d'écoulement.

Par comparaison à un traitement thermique par Iot de 3'000 composants, qui consomme environ 13.5 kWh sur la durée du traitement permettant de passer un Iot entier au travers d'un four porté à 800°C (soit 1 heure en moyenne), le traitement composant par composant au laser d'un même nombre de composants ne consomme que 0.025 kWh (6.1W × (3000 composants x5 secondes) / 3600 secondes). Il en résulte des gains économique et écologique conséquents.

De plus, les fours actuellement utilisés pour ce type de traitement thermique fonctionnent en permanence, hors période de maintenance annuelle de deux semaines. La consommation totale annuelle pour le maintien d'un four est ainsi de l'ordre de 100'000 kWh (four 13.5 kWh) à 163'000 kWh (four 20 kWh).

En complément, la trempe effectuée de manière traditionnelle par Iot dans l'eau/l'huile induit la formation de bulles en surface des composants, qui ralentissent le refroidissement.

Le gradient thermique obtenu par la trempe à l'air soufflé sur les composants traités selon l'invention est assurément plus important et surtout plus répétable d'un composant à l'autre. Outre ces avantages au niveau de la qualité du composant, la trempe sous flux gazeux évite d'utiliser de l'huile et de devoir ensuite nettoyer les composants.

En variante, le traitement peut être effectué sous une atmosphère particulière (gaz protecteur, atmosphère contrôlée, vide) de manière à préserver l'état de surface du composant et ainsi éviter toute oxydation.

L'invention permet de réduire grandement le coût énergétique du traitement par rapport à la technique traditionnelle de traitement par Iot dans un four de traitement thermique suivi d'une trempe par déversement d'un panier de composants dans un liquide. L'invention permet également d'améliorer la répétabilité du traitement entre les différents composants.

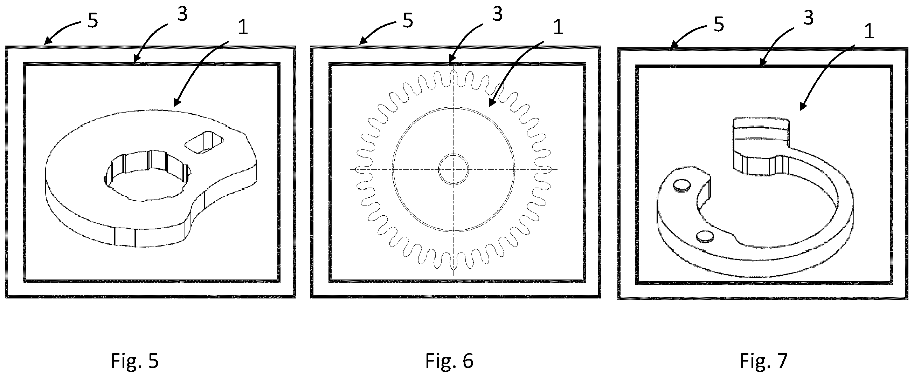

Des modes de réalisation d'un composant 1 selon l'invention, représentés sur les figures 2, 3, 4, 5, 6 et 7 sont obtenus par la mise en œuvre du procédé décrit précédemment.

Les composants 1 sur les figures 2 à 7 sont respectivement un axe de balancier, une bascule, un pignon arbré, une came, une roue et un ressort.

Les modes de réalisation d'un mouvement horloger 3 comprennent un composant 1 décrit précédemment.

Les modes de réalisation d'une pièce d'horlogerie 5 comprennent un composant 1 décrit précédemment.

Divers composants horlogers ont été décrits précédemment. Toutefois, l'invention peut être appliquée à tout autre composant, en particulier à tout autre composant micromécanique. En particulier, il peut être appliqué à une ébauche d'un mouvement de montre, notamment un pont dont les dimensions sont, par exemple, semblables à une bascule d'horlogerie.

L'invention permet de remplacer un traitement thermique par Iot (par exemple par Iot de plus de 1000 composants) au sein d'un four conventionnel, suivi d'une trempe à l'huile, par un échauffement du composant complet ou intégral par un faisceau laser suivi d'un refroidissement du composant dans un flux de gaz.

Les caractéristiques métallurgiques des composants obtenus après traitement sont similaires à celles obtenues par les traitements connus de l'art antérieur. Toutefois la répétabilité du traitement thermique est améliorée (suppression de la dispersion entre les composants traités d'un même Iot et de la dispersion entre les lots). En outre, la consommation en énergie du traitement thermique est fortement réduite. En effet, de brèves impulsions laser remplacent un maintien permanent d'un four à une température cible, 24h/24 et 350 jours/an. Même en utilisant les fours ainsi maintenus en température de manière intensive (8h/jours), l'économie annuelle est d'au moins 50'000 kWh.

## Revendications

1. Procédé de traitement thermique d'un composant horloger (1), le procédé comprenant les étapes suivantes :
- chauffage du composant par irradiation par un faisceau laser d'au moins 80%, voire d'au moins 90% de la surface du composant projetée parallèlement à la direction du faisceau laser, puis
- refroidissement du composant dans un flux gazeux.

2. Procédé selon la revendication précédente, **caractérisé en ce que** le chauffage est un chauffage de l'intégralité du volume du composant.

3. Procédé selon l'une des revendications précédentes, **caractérisé en ce que** le flux gazeux est un flux d'air ou d'un gaz neutre ou inerte.

4. Procédé selon l'une des revendications précédentes, **caractérisé en ce que** le composant est mis en mouvement relativement au faisceau laser lors du chauffage.

5. Procédé selon l'une des revendications précédentes, **caractérisé en ce que** le composant a :
- une plus grande dimension inférieure à 10 mm ou inférieure à 8 mm ou inférieure à 7 mm ou inférieure à 6 mm ou inférieure à 5 mm, et/ou
- une aire de plus grande surface projetée inférieure à 20 mm² ou inférieure à 15 mm² ou inférieure à 10 mm² ou inférieure à 6 mm² ou inférieure à 4 mm² ou inférieure à 2 mm² ou inférieure à 0.5 mm², et/ou
- un volume inférieur à 10 mm³ ou inférieur à 8 mm³ ou inférieur à 6 mm³ ou inférieur à 4 mm³ ou inférieur à 1.5 mm³ ou inférieur à 0.8 mm³ ou inférieur à 0.5 mm³.

6. Procédé selon l'une des revendications précédentes, **caractérisé en ce que** le composant est un axe et le faisceau laser est centré sur cet axe.

7. Composant horloger (1), notamment composant métallique, en particulier composant en acier, obtenu par la mise en œuvre du procédé selon l'une des revendications précédentes.

8. Mouvement horloger (3) comprenant un composant horloger selon la revendication 7.

9. Pièce d'horlogerie (5), notamment montre, en particulier montre bracelet, comprenant un composant horloger selon la revendication 7 ou un mouvement horloger selon la revendication 8.
